# EUROPEAN PATENT APPLICATION

(11) **EP 4 618 615 A1**
(43) Date of publication of application: **17.09.2025**
(21) Application number: 23887849.0
(22) Date of filing: 31.10.2023
(51) Int. Cl.: H04W 28/06

(54) **METHOD AND APPARATUS FOR DETERMINING PACKET LOSS, COMMUNICATION DEVICE AND READABLE STORAGE MEDIUM**

(30) Priority: 10.11.2022 CN 202211407179
(71) Applicant: Vivo Mobile Communication Co., Ltd., Dongguan, Guangdong 523863 (CN)
(72) Inventor: CHEN, Li, Dongguan, Guangdong 523863 (CN)
(74) Representative: Lavoix
(86) International application number: PCT/CN2023/128051
(87) International publication number: WO 2024/099159

(57) **Abstract**

This application discloses a method and apparatus for determining packet loss, a communication device, and a readable storage medium, and pertains to the field of wireless communication technologies. The method for determining packet loss in an embodiment of this application includes: determining, by a first object, that a target data packet is lost at a second object, where the second object is one or more objects preceding the first object in a data transmission path of the data packet.

## Description

### CROSS-REFERENCE TO RELATED APPLICATIONS

This application claims priority to Chinese Patent Application No. 202211407179.3, filed in China on November 10, 2022, which is incorporated herein by reference in its entirety.

### TECHNICAL FIELD

This application pertains to the field of wireless communication technologies and specifically relates to a method and apparatus for determining packet loss, a communication device, and a readable storage medium.

### BACKGROUND

In network architectures, data flows traverse multiple different interfaces (for example, N1 interface, N2 interface, N3 interface, ..., or X1 interface, X2 interface, ..., and so on) to reach various nodes. Upon reaching each node, the data packets are processed at that node according to defined protocol stacks.

How to process data packets at a node or protocol layer in order to effectively optimize scheduling, discarding, and other processing of data packets is a problem that needs to be addressed.

### SUMMARY

Embodiments of this application provide a method and apparatus for determining packet loss, a communication device, and a readable storage medium, so as to address the problem of how to effectively optimize the scheduling, discarding, and other processing of data packets.

According to a first aspect, a method for determining packet loss is provided, including:
determining, by a first object, that a target data packet is lost at a second object, where the second object is one or more objects preceding the first object in a data transmission path of the data packet.

According to a second aspect, an apparatus for determining packet loss is provided, including:
a determining module, configured to determine that a target data packet is lost at a second object, where the second object is one or more objects preceding the first object in a data transmission path of the data packet.

According to a third aspect, a communication device is provided, including a processor and a memory, where a program or instructions executable on the processor are stored on the memory, and when the program or instructions are executed by the processor, the steps of the method for determining packet loss according to the first aspect are implemented.

According to a fourth aspect, a communication device is provided, including a processor and a communication interface, where the processor is configured to determine that a target data packet is lost at a second object, the second object being one or more objects preceding the first object in a data transmission path of the data packet.

According to a fifth aspect, a readable storage medium is provided, where a program or instructions are stored on the readable storage medium, and when the program or instructions are executed by a processor, the steps of the method for determining packet loss according to the first aspect are implemented.

According to a sixth aspect, a chip is provided, where the chip includes a processor and a communication interface, the communications interface is coupled to the processor, and the processor is configured to run a program or instructions to implement the steps of the method for determining packet loss according to the first aspect.

According to a seventh aspect, a computer program/program product is provided, where the computer program/program product is stored in a storage medium, and the computer program/program product is executed by at least one processor to implement the steps of the method for determining packet loss according to the first aspect.

In the embodiments of this application, in processing a data packet, a first object may determine whether one or more previous second objects have lost a data packet, thereby effectively optimizing the scheduling, discarding, and other processing of data packets.

### BRIEF DESCRIPTION OF DRAWINGS

FIG. 1 is a block diagram of a wireless communication system to which embodiments of this application are applicable;
FIG. 2 is a schematic architectural diagram of a 5G system;
FIG. 3 is a schematic structural diagram of an access network;
FIG. 4 is a schematic structural diagram of a 5G system based on service interfaces in a non-roaming scenario;
FIG. 5 is a schematic structural diagram of a 5G system using reference points in a non-roaming scenario;
FIG. 6 is a schematic diagram illustrating a scenario where UE simultaneously accesses two data networks using multiple PDU sessions under non-roaming conditions;
FIG. 7 is a schematic structural diagram of a roaming scenario where a single PDU session is used to simultaneously access two data networks;
FIG. 8 is a schematic diagram of UE accessing a data network through non-3GPP;
FIG. 9 is a schematic structural diagram of interworking between 5GC and EPC in a non-roaming scenario;
FIG. 10 is a schematic structural diagram of an NG-U protocol stack;
FIG. 11 is a schematic structural diagram of an NG-C protocol stack;
FIG. 12 is a schematic structural diagram of an N2 interface protocol stack between AN and AMF;
FIG. 13 is a schematic structural diagram of an N2 interface protocol stack between AN and AMF and an N11 interface protocol stack between AMF and SMF;
FIG. 14 is a schematic structural diagram of a Xn-C protocol stack;
FIG. 15 is a schematic structural diagram of a user plane protocol stack;
FIG. 16 is a schematic structural diagram of a control plane protocol stack;
FIG. 17 is a schematic structural diagram of NAS transmission of SM, SMS, UE policy, and LCS;
FIG. 18 is a schematic structural diagram of an interface between UE and AMF;
FIG. 19 is a schematic structural diagram of an interface between UE and SMF;
FIG. 20 is a schematic structural diagram of a user plane protocol stack for a UE PDU session;
FIG. 21 is a schematic diagram of an F1 interface protocol;
FIG. 22 is a schematic diagram of a control plane before the establishment of signaling IPsec SA between UE and N3IWF;
FIG. 23 is a schematic diagram of a user plane before the establishment of signaling IPsec SA between UE and N3IWF;
FIG. 24 is a schematic diagram of an interface protocol stack between UE and N3IWF;
FIG. 25 is a schematic diagram of an SBI protocol stack;
FIG. 26 is a schematic flowchart of a method for determining packet loss according to an embodiment of this application;
FIG. 27 is a schematic structural diagram of an apparatus for determining packet loss according to an embodiment of this application;
FIG. 28 is a schematic structural diagram of a communication device according to an embodiment of this application;
FIG. 29 is a schematic structural diagram of a terminal according to an embodiment of this application;
FIG. 30 is a first schematic structural diagram of a network-side device according to an embodiment of this application; and
FIG. 31 is a second schematic structural diagram of a network-side device according to an embodiment of this application.

### DETAILED DESCRIPTION

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It is worth noting that the technology described in the embodiments of this application is not limited to long term evolution (Long Term Evolution, LTE)/LTE-Advanced (LTE-Advanced, LTE-A) systems, but may also be used in other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6th Generation, 6G) communication system.

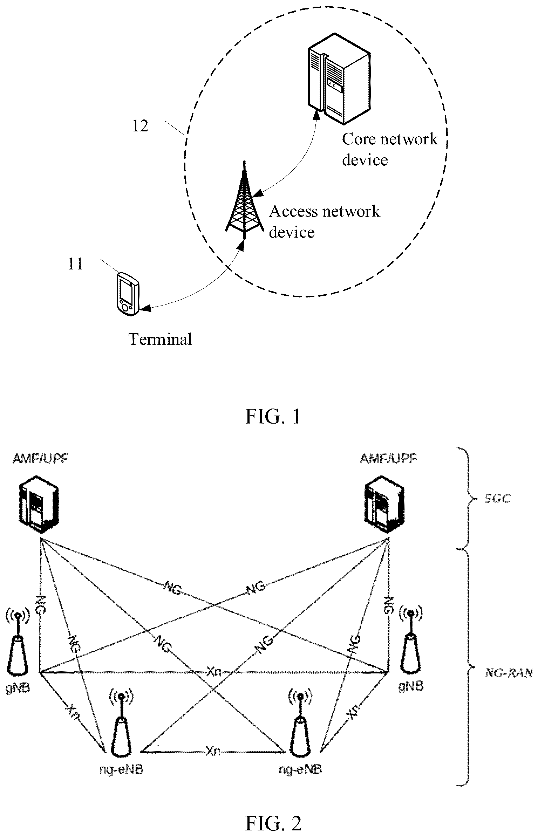

FIG. 1 is a block diagram of a wireless communication system to which embodiments of this application may be applicable. The wireless communication system includes a terminal 11 and a network-side device 12. The terminal 11 may be a terminal-side device, such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), or pedestrian user equipment (Pedestrian User Equipment, PUE), a smart appliance (a household device with a wireless communication function, for example, a refrigerator, a television, a washing machine, or furniture), a game console, a personal computer (personal computer, PC), a teller machine, or a self-service machine. The wearable device includes a smart watch, a smart band, a smart earphone, smart glasses, smart jewelry (a smart bangle, a smart bracelet, a smart ring, a smart necklace, a smart ankle bangle, a smart anklet, or the like), a smart wristband, smart clothing, or the like. It should be noted that the terminal 11 is not limited to any particular type in the embodiments of this application. The network-side device 12 may include an access network device or core network device, where the access network device may also be referred to as a radio access network device, radio access network (Radio Access Network, RAN), radio access network function, or radio access network unit. The access network device may include a base station, a WLAN access point, a Wi-Fi node, or the like. The base station may be referred to as NodeB, evolved NodeB (eNB), access point, base transceiver station (Base Transceiver Station, BTS), radio base station, radio transceiver, basic service set (Basic Service Set, BSS), extended service set (Extended Service Set, ESS), home NodeB, home evolved NodeB, transmitting receiving point (Transmitting Receiving Point, TRP), or other appropriate terms in the art. As long as the same technical effects are achieved, the base station is not limited to any specific technical term. It should be noted that in the embodiments of this application, only the base station in the NR system is used as an example for description, and the specific type of the base station is not limited. The core network device can include but is not limited to at least one of the following: core network node, core network function, mobility management entity (Mobility Management Entity, MME), access and mobility management function (Access and Mobility Management Function, AMF), session management function (Session Management Function, SMF), user plane function (User Plane Function, UPF), policy control function (Policy Control Function, PCF), policy and charging rules function (Policy and Charging Rules Function, PCRF), edge application server discovery function (Edge Application Server Discovery Function, EASDF), unified data management (Unified Data Management, UDM), unified data repository (Unified Data Repository, UDR), home subscriber server (Home Subscriber Server, HSS), centralized network configuration (Centralized network configuration, CNC), network repository function (Network Repository Function, NRF), network exposure function (Network Exposure Function, NEF), local NEF (Local NEF or L-NEF), binding support function (Binding Support Function, BSF), or application function (Application Function, AF). It should be noted that in the embodiments of this application, only the core network device in the NR system is described as an example, and the specific type of the core network device is not limited.

First, the following provides a description of the relevant technical content pertaining to this application.

### 1. XR service

Extended reality (eXtended reality, XR) refers to all real-and-virtual combined environments and human-machine interactions generated by computer technology and wearable devices. It includes representative forms such as augmented reality (Augmented Reality, AR), mixed reality (Mixed Reality, MR) and virtual reality (Virtual Reality, VR) and cross-disciplinary domains between them. Levels of virtuality range from partially sensory inputs to immersive virtuality. One key aspect of XR is extension of human experiences especially relating to the senses of existence (represented by VR) and the acquisition of cognition (represented by AR).

For VR services, the uplink primarily involves dense transmission of small data packets. These small data packets carry information such as gestures and control commands, serving as input and reference for rendering data in downlink. The downlink is dominated by the transmission of multimedia data such as video and audio. These multimedia data are received and presented in a timely manner to provide users with immersive experiences. Taking downlink video data as an example, data packets arrive periodically or quasi-periodically, with data rates reaching tens or even hundreds of megabits per second (megabits per second, Mbps). The typical frame rate (Frames Per Second, FPS) is 60 or 120, and the interval between adjacent packets is approximately 1/FPS seconds. These data packets are typically required to be successfully transmitted over the air interface within 10 milliseconds (ms), and the transmission success rate must not be lower than 99% or even 99.9%.

For AR services, in addition to the aforementioned dense transmission of small data packets in uplink, multimedia data such as video and audio may also be transmitted. The service characteristics are similar to those of the downlink, typically with relatively low data rates - for example, up to several tens of Mbps - and the time constraints for air interface transmission can be relaxed, typically requiring successful transmission within 60 ms. The characteristics of downlink data transmission are essentially the same as those of VR services.

Users expect to perform interactions and operations in extended reality environments. These actions and interactions include movements, gestures, and physical responses. Therefore, the degree of freedom (Degree of Freedom, DoF) describes the number of independent parameters used to define viewport movement in 3D space.

In an XR application scenario, a user in a virtual reality experience can obtain information about new angle of view through head turning or another action. In this case, the action of head turning of the XR user may be informed to a base station by transmission of an uplink signal. After receiving the uplink signal, the base station may schedule required downlink data for use by the XR user.

XR services primarily include video data, audio data, and some control signaling and special data with control functions. In wireless networks, XR service transmission mainly involves uplink and downlink transmissions and interactions of video/audio data between user equipment (User Equipment, UE, also referred to as terminal) and a wireless communication network (such as LTE/NR). During transmission of video and audio data, the UE also needs to transmit control signaling and special data with control functions over the uplink to the wireless network. The control signaling and special data are used to control the generation, processing, and downlink wireless transmission of video and audio data for XR services sent by the network to the UE.

The control signaling and special data with control functions include some service control data generated by the UE XR (Extended Reality) application encoder and control data information contained in service transmission protocols. For example,

at the application layer, the control signaling and special data may include (but is not limited to):
(1) I-frames (key frames) or non-field-of-view (non Field of view, non-FOV) frames generated by video encoders; and
(2) User behavior data collected by sensors, such as pose (pose)/control (control) data. The network may determine user actions from the reception of such data, for example, the aforementioned head turning, and then adjust the content of transmitted video data; and
at the transport protocol layer, the control signaling and special data may include:
(1) Acknowledge character (Acknowledge character, ACK) signaling (TCP feedback) of the transmission control protocol (Transmission Control Protocol, TCP) for downlink audio/video service transmission. The network needs to determine, based on whether a corresponding video/audio frame has been acknowledged by the UE, whether it can proceed to send subsequent frames; and
(2) RTP control protocol (RTP Control Protocol, RTCP) ACK signaling, which is control signaling used for real-time transmission of control data, acknowledging real-time requirements and time synchronization of service data transmission.

The network typically needs to receive, in a timely and reliable manner, the control signaling and special data with control functions from the UE in order to obtain the current transmission status of the service and the relevant necessary control information. Based on this information, the application server further generates the subsequent video and audio service data that need to be transmitted, and delivers them to the wireless network for processing and transmission. The service data ultimately is delivered to the UE via downlink.

### 2. Buffer status report (Buffer Status Report, BSR) Reporting

To facilitate uplink scheduling on the network side based on uplink data to be transmitted, a BSR reporting mechanism was introduced starting from LTE. Through this mechanism, the UE reports the amount of uplink data to be transmitted for each logical channel group (LCG) to the base station. This mechanism has been largely retained in NR.

The granularity of BSR reporting is at the level of logical channel group (Logical Channel Group, LCG). For each established logical channel, a logical channel group to which it belongs to can be configured. In NR, up to eight logical channel groups can be configured for a single UE.

BSR reporting is triggered based on the following events:
(1) New uplink data to be transmitted arrives at a logical channel belonging to a logical channel group, and either a priority of this logical channel is higher than that of any logical channel with uplink data to be transmitted, or none of the logical channels had uplink data to be transmitted prior to the arrival of the new data. In such cases, a regular BSR (Regular BSR) is triggered;
(2) In preparing a new uplink transport block (Transport Block, TB), if the number of padding (Padding) bits in the new TB is greater than or equal to the number of bits occupied by (a single BSR medium access control (Medium Access Control, MAC) control element (Control Element, CE) plus its corresponding subheader (Subheader)), in this case, a Padding BSR is triggered;
(3) A Regular BSR is triggered when the retxBSR-Timer timer expires and at least one logical channel has uplink data to be transmitted; and
(4) A periodic (Periodic) BSR is triggered when the periodicBSR-Timer timer expires.

When a Regular BSR is triggered and there are no uplink resources available for new transmission, the UE triggers a scheduling request (Scheduling Request, SR) to request uplink resources for new transmission from the network through physical uplink control channel (Physical Uplink Control Channel, PUCCH) transmission or random access.

When a Periodic BSR is triggered, the UE includes a BSR MAC CE in the constructed uplink TB only if there are available uplink resources for new transmission, but does not actively request uplink resources for new transmission from the network by triggering an SR.

When a Padding BSR is triggered, the UE directly includes a BSR MAC CE in the new uplink TB to be transmitted.

### 3. Access stratum (Access Stratum, AS) data transmission mechanism

### 3.1 Packet data convergence protocol (Packet Data Convergence Protocol, PDCP) layer and radio bearer (radio bearer)

Service data generated by the application (Application Layer, APP) layer of the UE is categorized into different service data flows based on their respective quality of service (Quality-of-Service, QoS) requirements. Each service data flow corresponds to the same or similar QoS requirements. In NR systems, the service data flow corresponds to a QoS flow, while in LTE systems, the service data flow corresponds to an evolved packet system (Evolved Packet System, EPS) bearer.

The service data is delivered to the AS layer in the form of data packets (Packet) and is further mapped to a radio bearer (Radio Bearer) based on the corresponding QoS flow (in NR) or EPS bearer (in LTE). A radio bearer includes a PDCP entity (a processing entity of the PDCP protocol layer), a radio link control (Radio Link Control, RLC) entity (a processing entity of the RLC protocol layer), and a corresponding logical channel (located in the medium access control (Medium Access Control, MAC) protocol layer).

Once a data packet delivered to the AS layer is mapped to a radio bearer, it is delivered as a PDCP service data unit (service data unit, SDU) to a corresponding PDCP entity for processing. The PDCP entity generates a corresponding PDCP protocol data unit (Protocol Data Unit, PDU) for each arriving PDCP SDU and assigns a PDCP sequence number (Sequence Number, SN) to indicate the transmission order of each PDCP SDU and its corresponding PDCP PDU within the PDCP entity. The value of the PDCP SN is assigned according to the order in which PDCP SDUs are delivered to the PDCP entity. Earlier arriving PDCP SDUs are prioritized for transmission, while those delivered later follow in sequence. Specifically, the PDCP entity maintains an internal variable TX_NEXT, which represents a total number of PDCP PDUs transmitted by the PDCP entity and is used to assign the value of the PDCP SN. Upon establishment of the PDCP entity, TX_NEXT is initialized to 0. Each time a PDCP SDU is delivered from upper layers (Upper layers) to the corresponding PDCP entity, the PDCP entity assigns the SN of a PDCP PDU corresponding to the PDCP SDU to TX_NEXT and then increments TX_NEXT by 1. Subsequently, the PDCP entity adds a header to each PDCP SDU to generate a corresponding PDCP PDU, which includes the SN value assigned to the PDCP PDU. The PDCP entity typically delivers the PDCP PDUs to a lower protocol layer (RLC) for subsequent processing and transmission in the order of the SNs contained in the PDCP PDUs. The SN is an ordinal number indicating the transmission order of each PDCP SDU.

The general principle is that the earlier a PDCP SDU arrives at the PDCP entity, the smaller its SN value, and the earlier it is transmitted.

### 3.2 RLC layer

The PDCP PDUs delivered from the PDCP entity to the corresponding RLC entity are treated as RLC SDUs to be transmitted and are buffered in a buffer of the UE for further processing by the RLC entity. Specifically, when a logical channel corresponding to an RLC entity is allocated a certain amount of transmission resources (see the following section on the MAC layer and logical channel), the RLC entity determines, based on the data volume that the allocated transmission resources can accommodate and the amount of RLC SDUs to be transmitted in the buffer, which RLC SDUs can be multiplexed into the allocated resources for transmission.

For one or more RLC SDUs determined by the RLC entity that can be fully multiplexed into the allocated transmission resources, the RLC entity adds a corresponding RLC header to each of these RLC SDUs, generates corresponding RLC PDUs, and delivers them to a lower protocol layer (MAC) for subsequent processing and transmission. If, after the above complete RLC SDUs are multiplexed, there is still some remaining transmission resource, but it is insufficient to accommodate another complete RLC SDU (that is, the amount of data that the resource can support is less than the amount of data required for multiplexing the next RLC SDU), the RLC entity performs segmentation. It adds a header to a portion of the next RLC SDU to be transmitted and generates an RLC PDU, which is then delivered to the lower protocol layer for subsequent processing and transmission.

For such segmented RLC SDUs, the remaining portion is retained in the buffer of the UE and waits for next uplink transmission resources before being transmitted.

### 3.3 MAC layer and logical channel

Each radio bearer corresponds to an RLC entity, which further corresponds to a logical channel (logical channel) at the MAC layer. When the UE is granted an uplink transmission resource authorization (uplink grant), a MAC entity of the UE further allocates the resources for this uplink transmission across multiple logical channels. Specifically, each logical channel is associated with a logical channel priority. The MAC entity of the UE allocates the available transmission resources for this uplink transmission to each logical channel in descending order of logical channel priority, based on the logical channel prioritization (Logical Channel Prioritization, LCP) resource allocation mechanism. The allocated resources correspond to the amount of data that can be transmitted over each logical channel.

As described above, based on the transmission resources allocated to each logical channel, the corresponding RLC entity delivers one or more RLC PDUs to a corresponding MAC layer logical channel. The MAC layer treats the RLC PDUs received from the RLC entity for each logical channel as MAC SDUs to be transmitted, adds a corresponding MAC header for each logical channel, forms MAC subPDUs of the corresponding logical channel, and multiplexes them into the overall transmission resources as the data to be transmitted over this logical channel in this uplink transmission. MAC subPDUs from multiple logical channels are combined to ultimately form a MAC PDU, which serves as a data packet for this uplink transmission and is transmitted to the network via radio signals.

It should be noted that since the RLC entity may segment RLC SDUs (as described above), for the uplink transmission resources obtained by each UE, the UE must first multiplex the remaining segments of RLC SDUs, that were previously segmented and not yet fully transmitted, for transmission. Then the UE can proceed to transmit data packets corresponding to subsequent other RLC SDUs.

In general, in existing LTE and NR networks, the UE typically follows a "first-arrived, first-transmitted" principle for data on each radio bearer to perform the above uplink data processing and transmission procedure. Specifically, for each radio bearer, at each protocol layer, the UE processes data packets (SDU) in the order in which they are delivered to a corresponding entity at that layer, and delivers processed data packets (PDU) to a next protocol layer in sequence. In other words, for data packets that are delivered to the AS layer earlier, the corresponding PDCP entity assigns them lower PDCP SNs, allowing them to be processed earlier by the protocol layers and be multiplexed first in uplink transmission resources. Subsequently arriving data packets are assigned higher PDCP SNs and are typically processed, multiplexed, and transmitted by the above protocol layers after the earlier arriving data packets. This means that for data packets mapped to each radio bearer, the UE ultimately performs in-sequence transmission mechanism based on the arrival sequence of data packets at the AS layer.

This principle is mainly adopted based on considerations of transmission delay: Since in existing wireless networks, the transmission delay requirements for data within each radio bearer are generally similar, and the AS layer of the UE cannot access the specific content of individual data packets to perform differentiated processing per data packet, processing, scheduling, and transmitting uplink data packets based on their arrival sequence is a relatively reasonable approach from the perspective of minimizing delay.

### 4. PDCP layer discard timer (Discard timer)

The basic principle of the DiscardTimer: The discard timer is a timer for the data radio bearer (Data Radio Bearer, DRB), and is only applicable to DRBs. On the transmitting side, a new timer is started for each SDU received from upper layers. If the timer expires, the corresponding SDU is discarded. This is used to prevent transmission buffer congestion. A specific duration of this timer is configured by the upper layer RRC.

Specifically, when a PDCP SDU delivered from upper layers is received, the transmitting PDCP entity starts a discard timer associated with that PDCP SDU.

When the discard timer associated with the PDCP SDU expires, or the PDCP SDU is successfully transmitted (that is, successful transmission confirmed by a PDCP status report), the transmitting PDCP entity shall discard the PDCP SDU along with the corresponding PDCP data PDU. If the PDCP data PDU has already been submitted to lower layers, the discard is indicated to the lower layers.

For signaling radio bearers (Signaling Radio Bearer, SRB), when upper layers request a PDCP SDU discard, the PDCP entity needs to discard all stored PDCP SDUs and PDCP PDUs.

Of course, discarding a PDCP SDU already associated with a PDCP SN results in an SN gap (gap) in the transmitted PDCP data PDUs, which increases PDCP re-ordering (re-ordering) delay in the receiving PDCP entity. In such cases, how to minimize the SN gap after SDU discard is up to UE implementation.

### 5. PDU set (set)

A PDU set consists of one or more PDUs that carry the payload of one unit of information generated at the application layer. In some implementations, the application layer requires all PDUs in the PDU set to use a corresponding unit of information. In other implementations, the application layer may still recover some or all units of information even when some PDUs are lost.

### 6. Data burst

A data burst refers to data generated by an application within a short period of time, including PDUs from one or more PDU sets.

### 7. 5G architecture

Refer to FIG. 2. A 5G system consists of an access network (Access Network, AN) (that is, NG-RAN in the figure) and a core network (5GC). In scenarios involving non-stand alone (Non-Stand Alone, NSA) deployment, 4G network elements also need to be considered.

### 7.1 There are two types of AN:

(1) gNB, which provides NR user plane and control plane protocol endpoints for the UE; and
(2) ng-eNB, which provides E-UTRA user plane and control plane protocol endpoints for the UE.

### 7.2 AN network structure

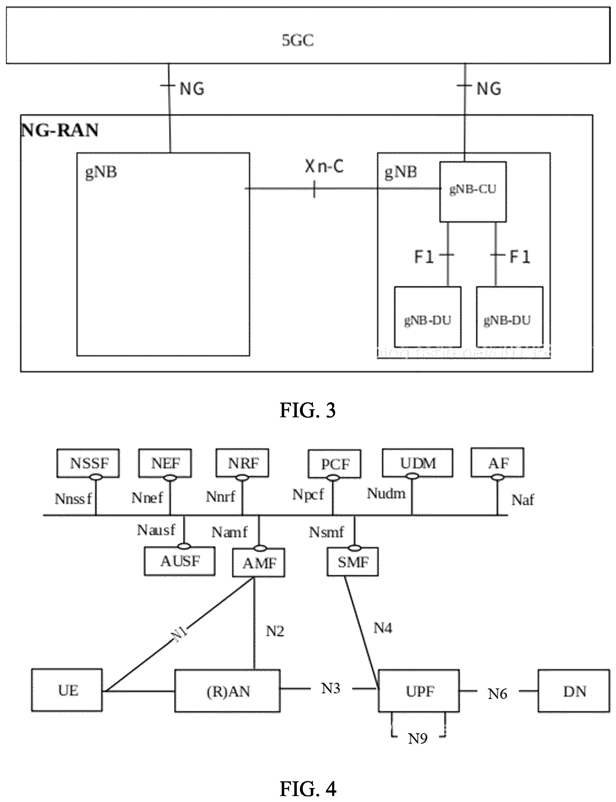

Refer to FIG. 3. Each logical gNB consists of a gNB-CU (central units) and several gNB-DUs (distributed units). Each gNB-CU is connected to gNB-DUs through the F1 logical interface.

### 7.3 5G system based on service interfaces in a non-roaming scenario

Refer to FIG. 4. FIG. 4 is a schematic structural diagram of a 5G system based on service interfaces in a non-roaming scenario.

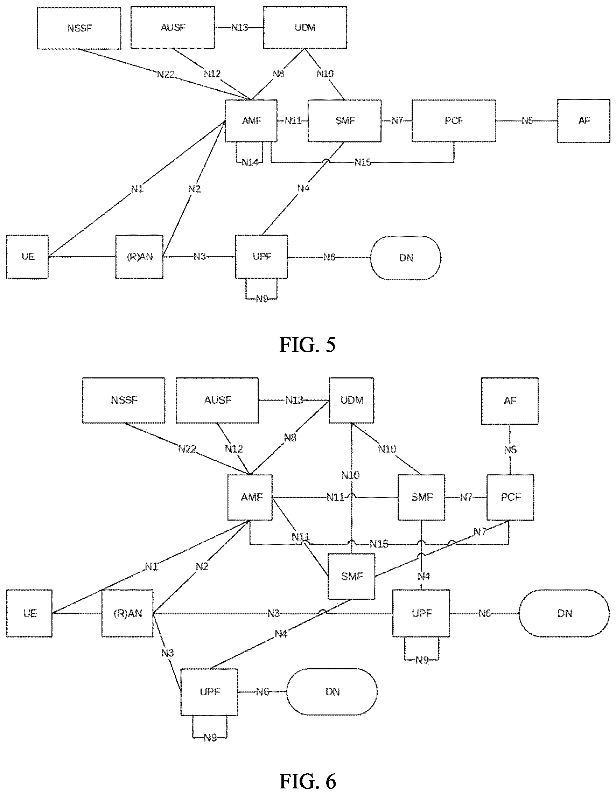

Refer to FIG. 5. FIG. 5 is a schematic diagram of a 5G system using reference points in a non-roaming scenario. This figure illustrates the interactions among network element functions, similar to the structural understanding approach in traditional cellular mobile networks.

Refer to FIG. 6. FIG. 6 shows a scenario where UE simultaneously accesses two data networks using multiple PDU sessions (session) under non-roaming conditions. This figure uses reference points to illustrate the scenario of selecting two SMFs for multiple PDU sessions. In this case, each SMF can also manage local (local) and central (central) UPFs for a given PDU session.

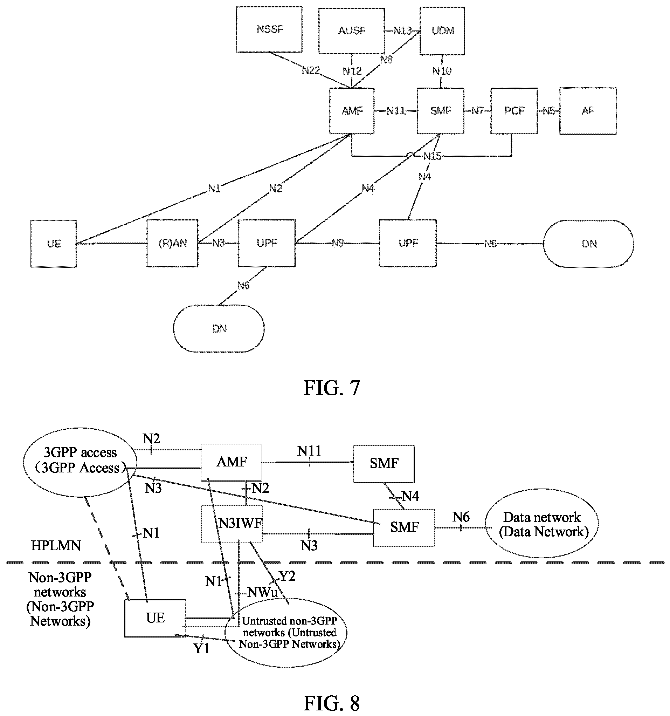

Refer to FIG. 7. FIG. 7 shows a structure where a single PDU session simultaneously accesses two data networks (local and central) in roaming scenario.

Refer to FIG. 8. FIG. 8 is a schematic diagram of UE accessing a data network through non-3GPP networks.

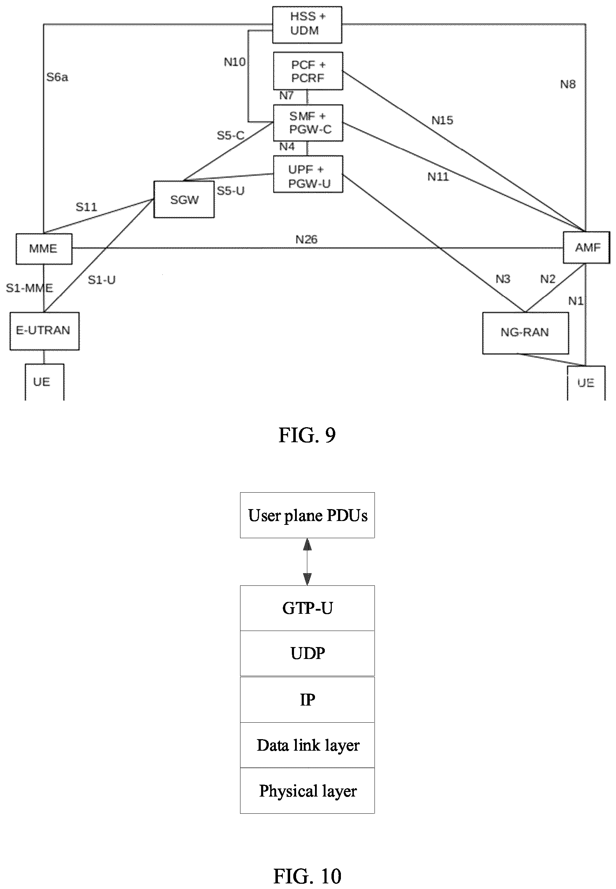

Refer to FIG. 9. FIG. 9 is a schematic structural diagram of interworking between 5GC and an evolved packet core (Evolved Packet Core, EPC) network in a non-roaming scenario.

### 8. Protocol stack

### 8.1 (N2) interface protocol stack between 5G-AN and 5GC

Refer to FIG. 10. FIG. 10 is a schematic structural diagram of an NG-U protocol stack.

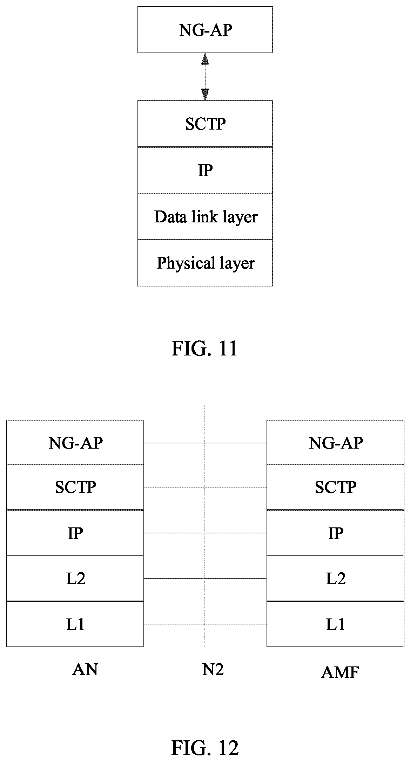

Refer to FIG. 11. FIG. 11 is a schematic structural diagram of an NG-C protocol stack.

Refer to FIG. 12. FIG. 12 is a schematic structural diagram of an N2 interface protocol stack between AN and AMF.

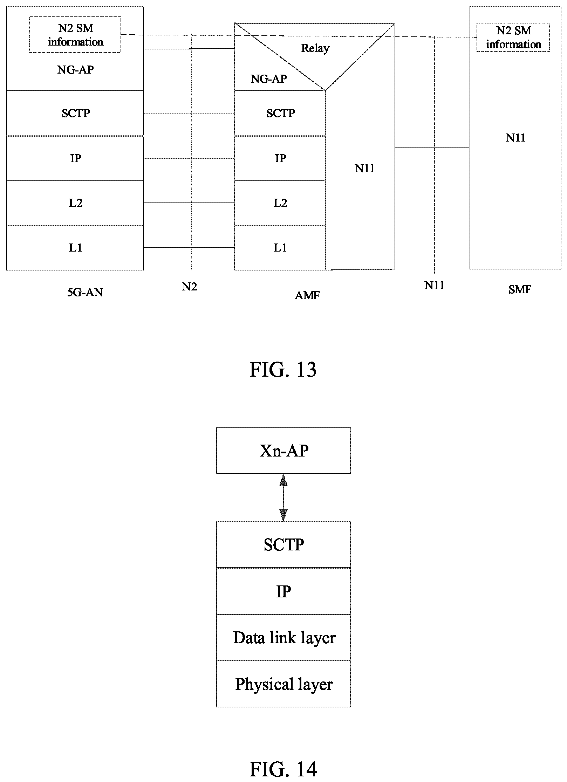

Refer to FIG. 13. FIG. 13 is a schematic structural diagram of an N2 interface protocol stack between AN and AMF and an N11 interface protocol stack between AMF and SMF.

An N2-SM message is part of an NG-AP message, and this part of the message is transparently transmitted by the AMF. From the perspective of the access network, the N2-SM message terminates at the AMF.

### 8.2 Xn protocol (for interworking between NG-RAN nodes) protocol stack

For a structure of the Xn-U protocol stack, refer to the schematic structural diagram of an NG-U protocol stack in FIG. 10.

Refer to FIG. 14. FIG. 14 is a schematic structural diagram of an Xn-C protocol stack.

### 8.3 Air interface protocol stack

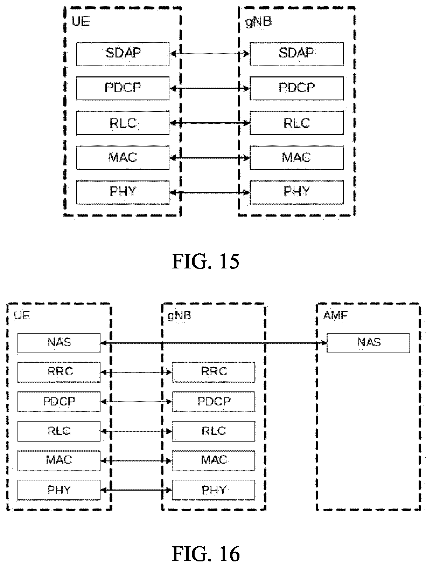

Refer to FIG. 15. FIG. 15 is a schematic structural diagram of a user plane protocol stack.

Refer to FIG. 16. FIG. 16 is a schematic structural diagram of a control plane protocol stack.

### 8.4 Interfaces between UE and 5GC

The endpoint of the N1 NAS signaling is between the UE and the AMF. One NAS signaling connection is used for registration management/connection management (Registration Management, RM/Connection Management, CM) and session management (Session Management, SM). The NAS protocol consists of two parts: NAS-MM and NAS-SM. In addition, there are several other protocols between the UE and the 5GC (SM, SMS, UE policy (policy), location service (Location Services, LCS), and the like), which are all transparently transmitted via N1 NAS-MM.

RM/CM NAS messages are decoupled from other types of NAS messages. That is, the AMF is responsible for RM/CM, while other messages are transparently transmitted to corresponding modules for processing.

If the UE accesses the 5GC through both 3GPP and non-3GPP access networks, there is an N1 NAS signaling connection for each access type.

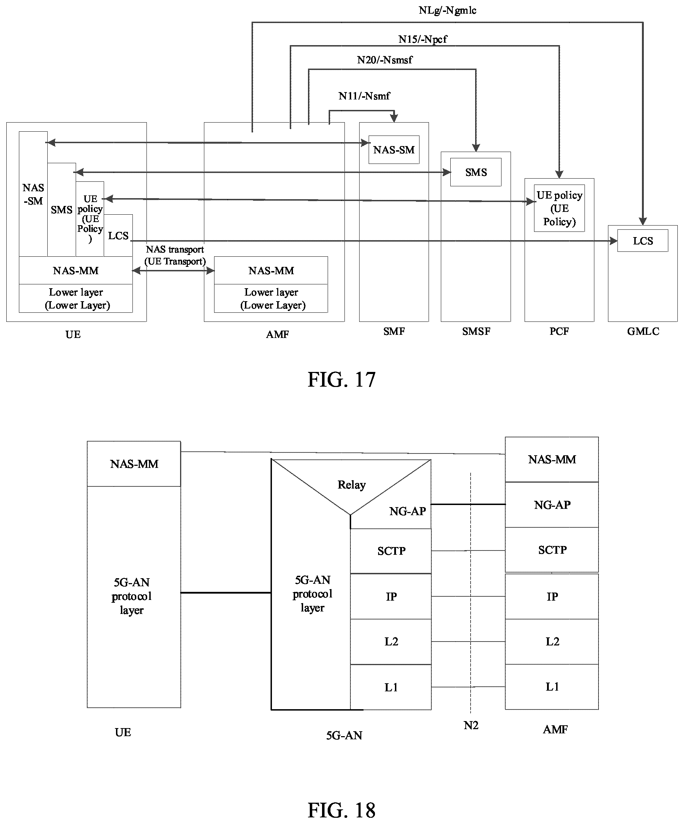

Refer to FIG. 17. FIG. 17 is a schematic structural diagram of NAS transmission of SM, SMS, UE policy, and LCS.

### 8.4.1 UE-AMF

Refer to FIG. 18. FIG. 18 is a schematic structural diagram of an interface between UE and AMF.

### 8.4.2 UE-SMF

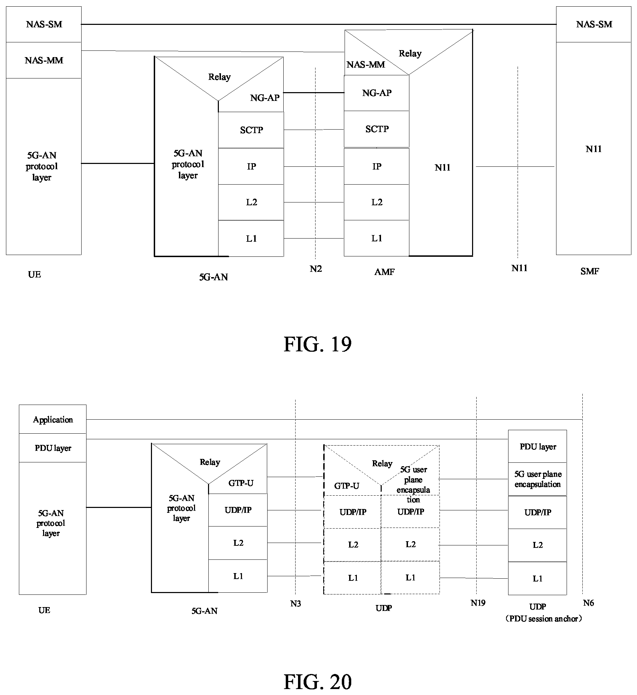

Refer to FIG. 19. FIG. 19 is a schematic structural diagram of an interface between UE and SMF.

### 8.4.3 User plane protocol stack for UE PDU session

Refer to FIG. 20. FIG. 20 is a schematic structural diagram of a user plane protocol stack for a UE PDU session.

### 8.5 F1 interface protocol

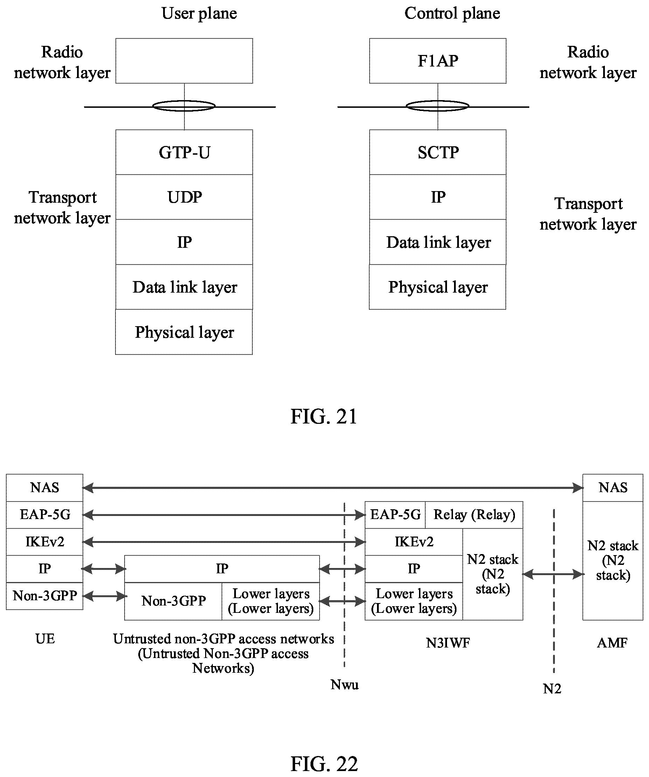

Refer to FIG. 21. FIG. 21 is a schematic diagram of an F1 interface protocol.

### 8.6 Non-3GPP access

Refer to FIG. 22. FIG. 22 is a schematic diagram of the control plane before the establishment of signaling IPsec SA between the UE and the non-3GPP interworking function (Non-3GPP InterWorking Function, N3IWF).

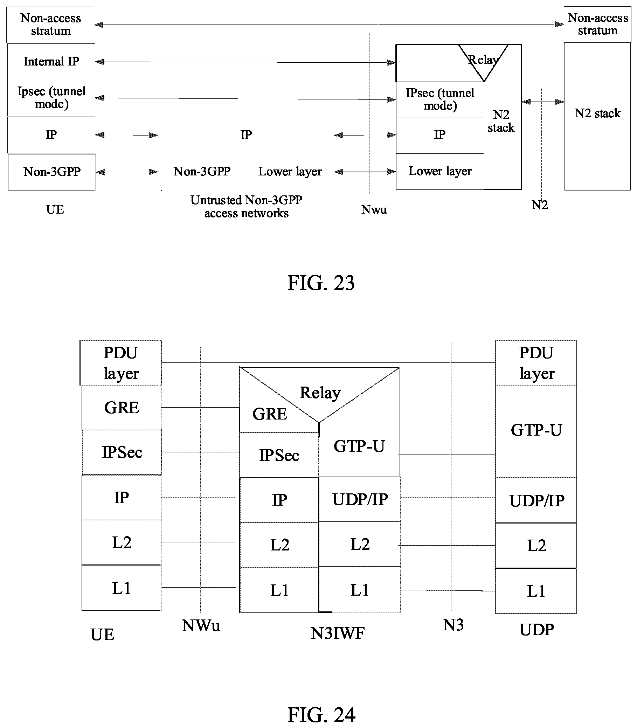

Refer to FIG. 23. FIG. 23 is a schematic diagram of a user plane before the establishment of signaling IPsec SA between UE and N3IWF.

Refer to FIG. 24. FIG. 24 is a schematic diagram of an interface protocol stack between UE and N3IWF.

### 8.5 5GC-5GC

The interfaces between network elements within the 5GC are service based interfaces (Service-Based Interface, SBI) and adopt the form of hyper text transfer protocol (Hyper Text Transfer Protocol, HTTP) services. The SBI interfaces include: Namf, Nsmf, Nudm, Nnrf, Nnssf, Nausf, Nnef, Nsmsf, Nudr, Npcf, N5g-eir, and Nlmf.

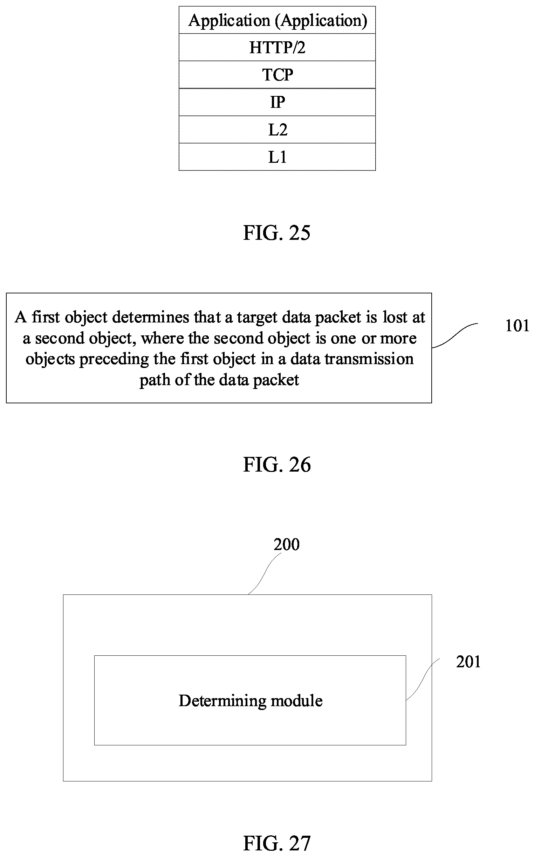

Refer to FIG. 25. FIG. 25 is a schematic diagram of an SBI protocol stack.

The following describes in detail a method and apparatus for determining packet loss, a communication device, and a readable storage medium provided in the embodiments of this application by using some embodiments and application scenarios thereof with reference to the accompanying drawings.

Referring to FIG. 26, an embodiment of this application provides a method for determining packet loss, including:

Step 101: A first object determines that a target data packet is lost at a second object, where the second object is one or more objects preceding the first object in a data transmission path of the data packet.

In this embodiment of this application, in processing a data packet, a first object may determine whether one or more previous second objects have lost a data packet, thereby effectively optimizing the scheduling, discarding, and other processing of data packets.

In this embodiment of this application, the target data packet loss includes at least one of the following situations:
(1) the target data packet is not successfully delivered to the first object;
(2) the target data packet is not successfully transmitted at the second object;
(3) the target data packet is lost at the second object;
(4) the target data packet is transmitted or processed at the second object beyond a preset delay; or
(5) the target data packet is transmitted at the second object beyond a preset number of times.

In this embodiment of this application, optionally, the first object is a first node.

Optionally, the first object may be any node in the network architectures described above.

In this embodiment of this application, the first object is a first node in the data transmission path of the data packet, and the second object is one or more communication interfaces preceding the first node in the data transmission path of the data packet. For example, if a (g)NB node on the RAN side is the first node, then the corresponding communication interfaces include at least one of the following: N2, N3, N4, ... N12, and the like.

In this embodiment of this application, optionally, the first object is a first protocol layer.

Optionally, the first object may be any protocol stack in the protocol stack structures described above.

Optionally, the second object is one or more second protocol layers preceding the first protocol layer in the data transmission path of the data packet, where the first protocol layer and the second protocol layer belong to a same node, and the node includes a network node or a terminal node. For example, if the MAC in the air interface protocol layer is the first object, for downlink services, the corresponding second object is one or more layers among the service data adaptation protocol (Service Data Adaptation Protocol, SDAP), PDCP, RLC, and the like.

In this embodiment of this application, optionally, the first object determines that the target data packet is lost at the second object based on at least one of the following: a timer, a counter, and a sequence number.
(1) Determining that the target data packet is lost at the second object based on the timer

In this embodiment of this application, optionally, the first object determining that the target data packet is lost at the second object includes: determining that the target data packet is lost at the second object in a case that the first object does not receive the target data packet within a preset time.

In this embodiment of this application, optionally, the preset time includes at least one of the following.
(1) A number of preset periods
   In this embodiment of this application, optionally, the preset period includes at least one of the following:
   a period of a data packet; that is, the generation period of the data packet;
   a period of a data packet group; that is, the generation period of the data packet group;
   a service period;
   a transmission period of a data packet; or
   a transmission period of a data packet group.
(2) A time configured by a network
(3) A time agreed by a protocol
(4) A delay of the data packet corresponding to the second object
   In this embodiment of this application, optionally, the delay of the data packet corresponding to the second object includes at least one of the following:
   a delay requirement of the data packet at the second object; for example, packet delay budget (packet Delay budget, PDB) or PDU set delay budget (PDU set Delay budget, PSDB); or
   a delay of the data packet at the second object.
(5) A remaining delay of the target data packet

In this embodiment of this application, optionally, the remaining delay includes at least one of the following:
a remaining delay for determining data packet discard or timeout;
a remaining delay of the data packet at the first object; or
a remaining delay requirement of the data packet at the first object; that is, the remaining delay requirement of the PDB/PSDB after accounting for the delay introduced by the first object, or the delay requirement on the first object.

Specifically, the remaining delay includes: the delay requirement minus the delay occupied by the first object.

(6) A time at which a third data packet in a same data packet group as the target data packet arrives at the first object

In this embodiment of this application, optionally, the third data packet includes at least one of the following:
the last data packet in the same data packet group as the target data packet;
   or
a preset number of data packets in the same data packet group as the target data packet.

### (2) Determining that the target data packet is lost at the second object based on the timer

In this embodiment of this application, optionally, the determining, by a first object, that a target data packet is lost at the second object includes:
determining that the target data packet is lost at the second object in a case that the first object receives a preset number of data packets and that the target data packet is not among the preset number of data packets; or,
determining that the target data packet is lost at the second object in a case that the first object a preset number of data packets and does not receive the target data packet.

In this embodiment of this application, optionally, the preset number includes at least one of the following:
a number configured by a network;
a number agreed by a protocol;
a number of data packets included in a data packet group, where the data packet group includes the data packet group to which the target data packet belongs;
a number of data packets within the preset time; or
a number of data packets in the same data packet group as the target data packet that arrive at the first object within the preset time.

### (3) Determining that the target data packet is lost at the second object based on the timer and the counter

In this embodiment of this application, optionally, the determining, by a first object, that a target data packet is lost at the second object includes:
determining that the target data packet is lost at the second object in a case that the first object receives a preset number of data packets within a preset time and that the target data packet is not among the preset number of data packets; or
determining that the target data packet is lost at the second object in a case that the first object receives a preset number of data packets within a preset time and does not receive the target data packet.

### (4) Determining that the target data packet is lost at the second object based on the sequence number

In this embodiment of this application, optionally, the determining, by a first object, that the target data packet is lost at the second object includes at least one of the following:
determining that the target data packet is lost at the second object in a case that the first object receives one or a preset number of first data packets and does not receive the target data packet, where a sequence number of the first data packet is after a sequence number of the target data packet. Specifically, for example, if there are data packets numbered 1, 2, 3, 4, 5, 6, 7, 8, 9, and any four data packets after data packet 3 are received while data packet 3 is not received, it is determined that data packet 3 is lost;
determining that the target data packet is lost at the second object in a case that the first object receives a preset number of consecutive first data packets and does not receive the target data packet, where a sequence number of the first data packet is after a sequence number of the target data packet. Specifically, for example, if there are data packets numbered 1, 2, 3, 4, 5, 6, 7, 8, 9, and the 4th, 5th, 6th, and 7th data packets after data packet 3 are received while data packet 3 is not received, it is determined that data packet 3 is lost;
determining that the target data packet is lost at the second object in a case that the first object receives a data packet with a first sequence number and does not receive the target data packet, where the first sequence number is a sequence number of the xth data packet after a sequence number of the target data packet; where the value of x may be 0, 1, 2, or the like. Specifically, for example, if there are data packets numbered 1, 2, 3, 4, 5, 6, 7, 8, 9, and the 7th data packet after data packet 3 is received while data packet 3 is not received, then it is determined that data packet 3 is lost; determining that the target data packet is lost at the second object in a case that the first object receives the last data packet in a data packet group to which the target data packet belongs and does not receive the target data packet. Specifically, for example, if there are data packets numbered 1, 2, 3, 4, 5, 6, 7, 8, 9, and the 9th data packet after data packet 3 is received while data packet 3 is not received, then it is determined that data packet 3 is lost;
determining that the target data packet is lost at the second object in a case that the first object receives one or a preset number of second data packets and does not receive the target data packet, where a sequence number of the second data packet is after a sequence number of the last data packet in the data packet group to which the target data packet belongs, or a sequence number of the second data packet is after the data packet group to which the target data packet belongs;
determining that the target data packet is lost at the second object in a case that the first object receives a data packet with a second sequence number and does not receive the target data packet, where the second sequence number is a sequence number of the wth data packet after a sequence number of the last data packet in the data packet group to which the target data packet belongs, or the second sequence number is a sequence number of the wth data packet after the data packet group to which the target data packet belongs; where the value of w may be 0, 1, 2, or the like;
determining that the target data packet is lost at the second object in a case that the first object receives one or a preset number of first data packet groups and does not receive the target data packet;
determining that the target data packet is lost at the second object in a case that the first object receives a data packet group with a third sequence number and does not receive the target data packet, where the third sequence number is a sequence number of the yth data packet group after the data packet group to which the target data packet belongs; where the value of y may be 0, 1, 2, or the like;
determining that the target data packet is lost at the second object in a case that the first object receives a first data packet in a first data packet group and does not receive the target data packet;
determining that the target data packet is lost at the second object in a case that the first object receives one or a preset number of data packets in a first data packet group and does not receive the target data packet;
determining that the target data packet is lost at the second object in a case that the first object receives a preset number of consecutive data packets in a first data packet group and does not receive the target data packet; or
determining that the target data packet is lost at the second object in a case that the first object receives the zth data packet in a first data packet group and does not receive the target data packet; where the value of z may be 0, 1, 2, or the like, and
a sequence number of the first data packet group is after a sequence number of the data packet group to which the target data packet belongs.

### (5) Determining that the target data packet is lost at the second object based on the sequence number and the timer

In this embodiment of this application, optionally, the determining, by a first object, that the target data packet is lost at the second object includes one of the following:
determining that the target data packet is lost at the second object in a case that within the preset time, the first object receives one or a preset number of first data packets and does not receive the target data packet, where a sequence number of the first data packet is after a sequence number of the target data packet;
determining that the target data packet is lost at the second object in a case that within the preset time, the first object receives a preset number of consecutive first data packets and does not receive the target data packet, where a sequence number of the first data packet is after a sequence number of the target data packet;
determining that the target data packet is lost at the second object in a case that within the preset time, the first object receives a data packet with a first sequence number and does not receive the target data packet, where the first sequence number is a sequence number of the xth data packet after a sequence number of the target data packet;
determining that the target data packet is lost at the second object in a case that within the preset time, the first object receives the last data packet in a data packet group to which the target data packet belongs and does not receive the target data packet;
determining that the target data packet is lost at the second object in a case that within the preset time, the first object receives one or a preset number of second data packets and does not receive the target data packet, where a sequence number of the second data packet is after a sequence number of the last data packet in the data packet group to which the target data packet belongs, or a sequence number of the second data packet is after the data packet group to which the target data packet belongs;
determining that the target data packet is lost at the second object in a case that within the preset time, the first object receives a data packet with a second sequence number and does not receive the target data packet, where the second sequence number is a sequence number of the wth data packet after a sequence number of the last data packet in the data packet group to which the target data packet belongs, or the second sequence number is a sequence number of the wth data packet after the data packet group to which the target data packet belongs;
determining that the target data packet is lost at the second object in a case that within the preset time, the first object receives one or a preset number of first data packet groups and does not receive the target data packet;
determining that the target data packet is lost at the second object in a case that within the preset time, the first object receives a data packet group with a third sequence number and does not receive the target data packet, where the third sequence number is a sequence number of the yth data packet group after the data packet group to which the target data packet belongs;
determining that the target data packet is lost at the second object in a case that within the preset time, the first object receives a first data packet in a first data packet group and does not receive the target data packet;
determining that the target data packet is lost at the second object in a case that within the preset time, the first object receives one or a preset number of data packets in a first data packet group and does not receive the target data packet;
determining that the target data packet is lost at the second object in a case that within the preset time, the first object receives a preset number of consecutive data packets in a first data packet group and does not receive the target data packet; or
determining that the target data packet is lost at the second object in a case that within the preset time, the first object receives the zth data packet in a first data packet group and does not receive the target data packet;
where a sequence number of the first data packet group is after a sequence number of the data packet group to which the target data packet belongs.

It should be noted that in this embodiment of this application, the sequence numbers may follow an ascending order (from small to large), in which case, the sequence number of a later data packet or data packet group mentioned above is greater than that of an earlier one. Of course, the sequence numbers in this embodiment of this application may alternatively follow a descending order (from large to small), in which case the sequence number of a later data packet or data packet group is smaller than that of an earlier one.

The reception of a data packet by the first object, as described in the above embodiment, may also be expressed as the data packet being transmitted to or successfully transmitted to the first object, or being delivered to or successfully delivered to the first object.

In this embodiment of this application, optionally, the preset time includes at least one of the following:
a number of preset periods;
a time configured by a network;
a time agreed by a protocol;
a delay of the data packet corresponding to the second object;
a remaining delay of the target data packet; or
a time at which a third data packet in a same data packet group as the target data packet arrives at the first object.

In this embodiment of this application, optionally, the preset period includes at least one of the following:
a period of a data packet;
a period of a data packet group;
a service period;
a transmission period of a data packet; or
a transmission period of a data packet group.

In this embodiment of this application, optionally, the delay of the data packet corresponding to the second object includes at least one of the following:
a delay requirement of the data packet at the second object; or
a delay of the data packet at the second object.

In this embodiment of this application, optionally, the remaining delay includes at least one of the following:
a remaining delay for determining data packet discard or timeout;
a remaining delay of the data packet at the first object; or
a remaining delay requirement of the data packet at the first object.

In this embodiment of this application, optionally, the third data packet includes at least one of the following:
the last data packet in the same data packet group as the target data packet; or
a preset number of data packets in the same data packet group as the target data packet.

In this embodiment of this application, optionally, the preset number includes at least one of the following:
a number configured by a network;
a number agreed by a protocol;
a number of data packets included in a data packet group, where the data packet group includes the data packet group to which the target data packet belongs;
a number of data packets within the preset time; or
a number of data packets in the same data packet group as the target data packet that arrive at the first object within the preset time.

In this embodiment of this application, optionally, x, y, w, and/or z are configured by a network or agreed by a protocol.

In this embodiment of this application, optionally, the data packet includes at least one of the following:
a PDCP SDU;
a PDCP PDU;
a data packet in a PDCP buffer (buffer);
a data packet corresponding to an RLC bearer (bearer);
a data packet corresponding to a MAC SDU;
a data packet corresponding to a MAC PDU;
a PDU;
a PDU set (set);
a data burst (Burst);
a data frame (Frame);
a data slice (Slice);
a picture (Picture);
a group of pictures (Group of pictures, GOP);
a group of PDU sets (group of PDU sets);
a group of PDUs (group of PDUs); or
an IP data packet (packet).

In this embodiment of this application, optionally, the data packet group includes at least one of the following:
a group of PDU sets;
a PDU set;
a data burst;
a data frame;
a data slice;
a picture;
a group of pictures;
a PDU group; or
an IP data packet.

In this embodiment of this application, optionally, after determining that the target data packet is lost at the second object, the first object performs at least one of the following operations:
(1) continuing transmission or processing of data packets;
   that is, continuing to transmit or process other data packets in the data packet group to which the target data packet belongs;
(2) discarding other data packets in the data packet group to which the target data packet belongs;
(3) discarding other data packets associated with the target data packet;
(4) discarding other data packets based on the target data packet;
   where the other data packets based on the target data packet refer to other data packets that depends on (depends on) the target data packet; or
(5) lowering priorities of other data packets in the data packet group to which the target data packet belongs.

The priority includes at least one of the following: scheduling priority, transmission priority, processing priority, and decoding priority. This embodiment of this application is applicable to the processing of data packets for XR services, and are equally applicable to the processing of data packets for other services with similar characteristics to XR services (where data packets in the data flow are transmitted sequentially according to their sequence numbers).

The method for determining packet loss provided in this embodiment of this application can be executed by an apparatus for determining packet loss. In the embodiments of this application, an apparatus for determining packet loss provided in an embodiment of this application is described by using the apparatus for determining packet loss performing the method for determining packet loss as an example.

Referring to FIG. 27, an embodiment of this application further provides an apparatus 200 for determining packet loss, including:
a determining module 201, configured to determine that a target data packet is lost at a second object, where the second object is one or more objects preceding the first object in a data transmission path of the data packet.

In this embodiment of this application, in processing a data packet, a first object may determine whether one or more previous second objects have lost a data packet, thereby effectively optimizing the scheduling, discarding, and other processing of data packets.

Optionally, the first object is a first node in the data transmission path of the data packet, and the second object is one or more communication interfaces preceding the first node in the data transmission path of the data packet;
or
the first object is a first protocol layer in the data transmission path of the data packet, and the second object is one or more second protocol layers preceding the first protocol layer in the data transmission path, where the first protocol layer and the second protocol layer belong to a same node.

Optionally, the target data packet loss includes at least one of the following situations:
the target data packet is not successfully delivered to the first object;
the target data packet is not successfully transmitted at the second object;
the target data packet is lost at the second object;
the target data packet is transmitted or processed at the second object beyond a preset delay; or
the target data packet is transmitted at the second object beyond a preset number of times.

Optionally, the determining module 201 includes:
a first determining sub-module, configured to determine that the target data packet is lost at the second object in a case that the first object does not receive the target data packet within a preset time.

Optionally, the determining module 201 includes:
a second determining sub-module, configured to determine that the target data packet is lost at the second object in a case that a preset number of data packets are received and that the target data packet is not among the preset number of data packets; or, determine that the target data packet is lost at the second object in a case that a preset number of data packets are received and that the target data packet is not received.

Optionally, the determining module 201 includes:
a third determining sub-module, configured to determine that the target data packet is lost at the second object in a case that a preset number of data packets are received within a preset time and that the target data packet is not among the preset number of data packets.

Optionally, the determining module 201 includes at least one of the following:
a fourth determining sub-module, configured to determine that the target data packet is lost at the second object in a case that one or a preset number of first data packets are received and that the target data packet is not received, where a sequence number of the first data packet is after a sequence number of the target data packet;
a fifth determining sub-module, configured to determine that the target data packet is lost at the second object in a case that a preset number of consecutive first data packets are received and that the target data packet is not received, where a sequence number of the first data packet is after a sequence number of the target data packet;
a sixth determining sub-module, configured to determine that the target data packet is lost at the second object in a case that a data packet with a first sequence number is received and that the target data packet is not received, where the first sequence number is a sequence number of the xth data packet after a sequence number of the target data packet;
a seventh determining sub-module, configured to determine that the target data packet is lost at the second object in a case that the last data packet in a data packet group to which the target data packet belongs is received and that the target data packet is not received;
an eighth determining sub-module, configured to determine that the target data packet is lost at the second object in a case that one or a preset number of second data packets are received and that the target data packet is not received, where a sequence number of the second data packet is after a sequence number of the last data packet in the data packet group to which the target data packet belongs, or a sequence number of the second data packet is after the data packet group to which the target data packet belongs;
a ninth determining sub-module, configured to determine that the target data packet is lost at the second object in a case that a data packet with a second sequence number is received and that the target data packet is not received, where the second sequence number is a sequence number of the wth data packet after a sequence number of the last data packet in the data packet group to which the target data packet belongs, or the second sequence number is a sequence number of the wth data packet after the data packet group to which the target data packet belongs;
a tenth determining sub-module, configured to determine that the target data packet is lost at the second object in a case that one or a preset number of first data packet groups are received and that the target data packet is not received;
an eleventh determining sub-module, configured to determine that the target data packet is lost at the second object in a case that a data packet group with a third sequence number is received and that the target data packet is not received, where the third sequence number is a sequence number of the yth data packet group after the data packet group to which the target data packet belongs;
a twelfth determining sub-module, configured to determine that the target data packet is lost at the second object in a case that a first data packet in a first data packet group is received and that the target data packet is not received;
a thirteenth determining sub-module, configured to determine that the target data packet is lost at the second object in a case that one or a preset number of data packets in a first data packet group are received and that the target data packet is not received;
a fourteenth determining sub-module, configured to determine that the target data packet is lost at the second object in a case that a preset number of consecutive data packets in a first data packet group are received and that the target data packet is not received; or
a fifteenth determining sub-module, configured to determine that the target data packet is lost at the second object in a case that the zth data packet in a first data packet group is received and that the target data packet is not received;
where a sequence number of the first data packet group is after a sequence number of the data packet group to which the target data packet belongs.

Optionally, the determining module 201 includes one of the following:
a sixteenth determining sub-module, configured to determine that the target data packet is lost at the second object in a case that within the preset time, one or a preset number of first data packets are received and that the target data packet is not received, where a sequence number of the first data packet is after a sequence number of the target data packet;
a seventeenth determining sub-module, configured to determine that the target data packet is lost at the second object in a case that a preset number of consecutive first data packets are received and that the target data packet is not received, where a sequence number of the first data packet is after a sequence number of the target data packet;
an eighteenth determining sub-module, configured to determine that the target data packet is lost at the second object in a case that within the preset time, a data packet with a first sequence number is received and that the target data packet is not received, where the first sequence number is a sequence number of the xth data packet after a sequence number of the target data packet;
a nineteenth determining sub-module, configured to determine that the target data packet is lost at the second object in a case that within the preset time, the last data packet in a data packet group to which the target data packet belongs is received and that the target data packet is not received;
a twentieth determining sub-module, configured to determine that the target data packet is lost at the second object in a case that within the preset time, one or a preset number of second data packets are received and that the target data packet is not received, where a sequence number of the second data packet is after a sequence number of the last data packet in the data packet group to which the target data packet belongs, or a sequence number of the second data packet is after the data packet group to which the target data packet belongs;
a twenty first determining sub-module, configured to determine that the target data packet is lost at the second object in a case that within the preset time, a data packet with a second sequence number is received and that the target data packet is not received, where the second sequence number is a sequence number of the wth data packet after a sequence number of the last data packet in the data packet group to which the target data packet belongs, or the second sequence number is a sequence number of the wth data packet after the data packet group to which the target data packet belongs;
a twenty second determining sub-module, configured to determine that the target data packet is lost at the second object in a case that within the preset time, one or a preset number of first data packet groups are received and that the target data packet is not received;
a twenty third determining sub-module, configured to determine that the target data packet is lost at the second object in a case that within the preset time, a data packet group with a third sequence number is received and that the target data packet is not received, where the third sequence number is a sequence number of the yth data packet group after the data packet group to which the target data packet belongs;
a twenty fourth determining sub-module, configured to determine that the target data packet is lost at the second object in a case that within the preset time, a first data packet in a first data packet group is received and that the target data packet is not received;
a twenty fifth determining sub-module, configured to determine that the target data packet is lost at the second object in a case that within the preset time, one or a preset number of data packets in a first data packet group are received and that the target data packet is not received;
a twenty sixth determining sub-module, configured to determine that the target data packet is lost at the second object in a case that within the preset time, a preset number of consecutive data packets in a first data packet group are received and that the target data packet is not received; or
a twenty seventh determining sub-module, configured to determine that the target data packet is lost at the second object in a case that within the preset time, the zth data packet in a first data packet group is received and that the target data packet is not received;
where a sequence number of the first data packet group is after a sequence number of the data packet group to which the target data packet belongs.

Optionally, the preset time includes at least one of the following:
a number of preset periods;
a time configured by a network;
a time agreed by a protocol;
a delay of the data packet corresponding to the second object;
a remaining delay of the target data packet; or
a time at which a third data packet in a same data packet group as the target data packet arrives at the first object.

Optionally, the preset period includes at least one of the following:
a period of a data packet;
a period of a data packet group;
a service period;
a transmission period of a data packet; or
a transmission period of a data packet group.

Optionally, the delay of the data packet corresponding to the second object includes at least one of the following:
a delay requirement of the data packet at the second object; or
a delay of the data packet at the second object.

Optionally, the remaining delay includes at least one of the following:
a remaining delay for determining data packet discard or timeout;
a remaining delay of the data packet at the first object; or
a remaining delay requirement of the data packet at the first object.

Optionally, the third data packet includes at least one of the following:
the last data packet in the same data packet group as the target data packet; or
a preset number of data packets in the same data packet group as the target data packet.

Optionally, the preset number includes at least one of the following:
a number configured by a network;
a number agreed by a protocol;
a number of data packets included in a data packet group, where the data packet group includes the data packet group to which the target data packet belongs;
a number of data packets within the preset time; or
a number of data packets in the same data packet group as the target data packet that arrive at the first object within the preset time.

Optionally, x, y, w, and/or z are configured by a network or agreed by a protocol.

Optionally, the data packet includes at least one of the following:
a PDCP SDU;
a PDCP PDU;
a data packet in a PDCP buffer;
a data packet corresponding to an RLC bearer;
a data packet corresponding to a MAC SDU;
a data packet corresponding to a MAC PDU;
a PDU;
a PDU set;
a data burst;
a data frame;
a data slice;
a picture;
a group of pictures;
a group of PDU sets;
a PDU group; or
an IP data packet.

Optionally, the data packet group includes at least one of the following:
a group of PDU sets;
a PDU set;
a data burst;
a data frame;
a data slice;
a picture;
a group of pictures;
a PDU group; or
an IP data packet.

Optionally, the apparatus 200 for determining packet loss further includes:
an execution module, configured to perform at least one of the following operations after the determining module 201 determines that the target data packet is lost at the second object:
continue transmission or processing of data packets;
discard other data packets in the data packet group to which the target data packet belongs;
discard other data packets associated with the target data packet;
discard other data packets based on the target data packet; or
lower priorities of other data packets in the data packet group to which the target data packet belongs.

The apparatus for determining packet loss in this embodiment of this application may be an electronic device such as an electronic device with an operating system, or a component in an electronic device such as an integrated circuit or chip. The electronic device may be a terminal or a device other than a terminal. For example, the terminal may include but is not limited to the types of the terminal 11 listed above, and the other device may be a server, a network attached storage (Network Attached Storage, NAS), or the like. This is not specifically limited in this embodiment of this application.

The apparatus for determining packet loss provided in this embodiment of this application can implement the processes implemented in the method embodiment in FIG. 26, with the same technical effects achieved. To avoid repetition, details are not repeated herein.

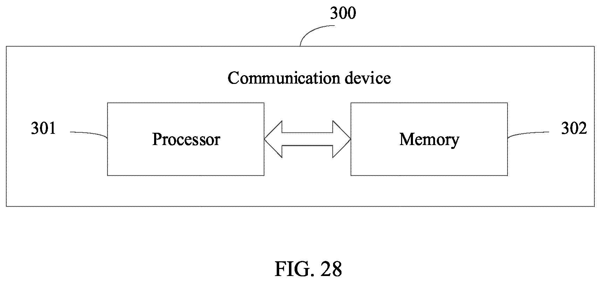

Optionally, as shown in FIG. 28, an embodiment of this application further provides a communication device 300 including a processor 301 and a memory 302. A program or instructions executable on the processor 301 are stored on the memory 302. When the program or instructions are executed by the processor 301, the steps of the foregoing embodiment of the method for determining packet loss are implemented, with the same technical effects achieved. To avoid repetition, details are not repeated herein.

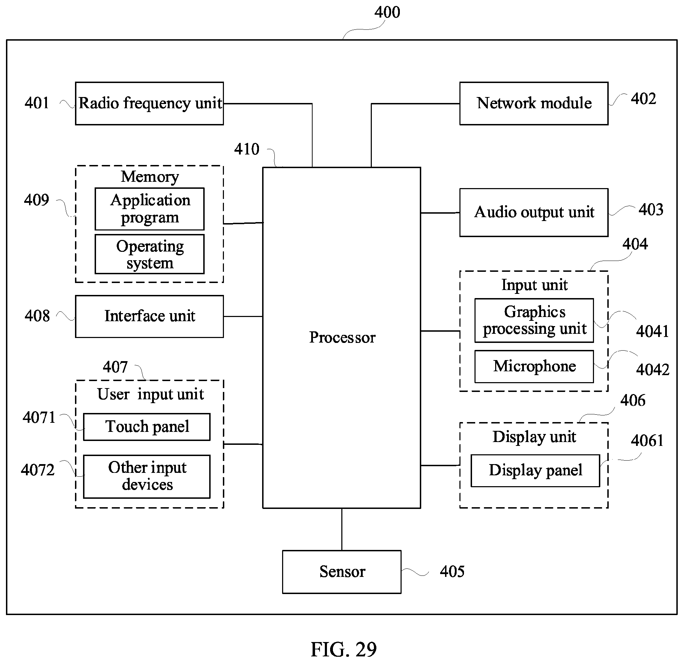

An embodiment of this application further provides a terminal, including a processor and a communication interface, where the processor is configured to determine that a target data packet is lost at a second object, the second object being one or more objects preceding the first object in a data transmission path of the data packet. This terminal embodiment corresponds to the foregoing method embodiment. All processes and implementations in the foregoing method embodiment are applicable to this terminal embodiment, with the same technical effects achieved. Specifically, FIG. 29 is a schematic diagram of a hardware structure of a terminal implementing embodiments of this application.

The terminal 400 includes but is not limited to at least part of these components: a radio frequency unit 401, a network module 402, an audio output unit 403, an input unit 404, a sensor 405, a display unit 406, a user input unit 407, an interface unit 408, a memory 409, and a processor 410.

Persons skilled in the art can understand that the terminal 400 may further include a power supply (for example, a battery) supplying power to the components, and the power supply may be logically connected to the processor 410 through a power management system. In this way, functions such as charge management, discharge management, and power consumption management are implemented by using the power management system. The structure of the terminal shown in FIG. 29 does not constitute any limitation on the terminal, and the terminal may include more or fewer components than shown in the figure, or combine some components, or have different component arrangements. Details are not described herein.

It should be understood that in this embodiment of this application, the input unit 404 may include a graphics processing unit (Graphics Processing Unit, GPU) 4041 and a microphone 4042. The graphics processing unit 4041 processes image data of a static picture or a video that is obtained by an image capture apparatus (for example, a camera) in a video capture mode or an image capture mode. The display unit 406 may include a display panel 4061. The display panel 4061 may be configured in a form of a liquid crystal display, an organic light-emitting diode display, or the like. The user input unit 407 includes at least one of a touch panel 4071 and other input devices 4072. The touch panel 4071 is also referred to as a touchscreen. The touch panel 4071 may include two parts: a touch detection apparatus and a touch controller. The other input devices 4072 may include but are not limited to a physical keyboard, a function key (for example, a volume control key or a power on/off key), a trackball, a mouse, and a joystick. Details are not described herein.

In this embodiment of this application, the radio frequency unit 401 receives downlink data from a network-side device and transmits the data to the processor 410 for processing; and the radio frequency unit 401 can additionally send uplink data to the network-side device. Generally, the radio frequency unit 401 includes but is not limited to an antenna, an amplifier, a transceiver, a coupler, a low noise amplifier, and a duplexer.

The memory 409 may be configured to store software programs or instructions and various data. The memory 409 may primarily include a first storage area for storing programs or instructions and a second storage area for storing data. The first storage area may store an operating system, an application program or instructions required by at least one function (for example, a sound playback function or an image playback function), and the like. In addition, the memory 409 may include a volatile memory or a non-volatile memory, or the memory 409 may include a volatile memory and a non-volatile memory. The non-volatile memory may be a read-only memory (Read-Only Memory, ROM), a programmable read-only memory (programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 409 in this embodiment of this application includes but is not be limited to these or any other applicable types of memories.

The processor 410 may include one or more processing units. Optionally, the processor 410 may integrate an application processor and a modem processor. The application processor primarily processes operations involving an operating system, user interface, application program, or the like. The modem processor primarily processes radio communication signals, for example, being a baseband processor. It can be understood that the modem processor may be alternatively not integrated in the processor 410.

The processor 410 is configured to determine that a target data packet is lost at a second object, where the second object is one or more objects preceding the first object in a data transmission path of the data packet.

In this embodiment of this application, in processing a data packet, a first object may determine whether one or more previous second objects have lost a data packet, thereby effectively optimizing the scheduling, discarding, and other processing of data packets.

Optionally, the first object is a first node in the data transmission path of the data packet, and the second object is one or more communication interfaces preceding the first node in the data transmission path of the data packet;
or
the first object is a first protocol layer in the data transmission path of the data packet, and the second object is one or more second protocol layers preceding the first protocol layer in the data transmission path, where the first protocol layer and the second protocol layer belong to a same node.

Optionally, the target data packet loss includes at least one of the following situations:
the target data packet is not successfully delivered to the first object;
the target data packet is not successfully transmitted at the second object;
the target data packet is lost at the second object;
the target data packet is transmitted or processed at the second object beyond a preset delay; or
the target data packet is transmitted at the second object beyond a preset number of times.

Optionally, the processor 410 is configured to determine that the target data packet is lost at the second object in a case that the first object does not receive the target data packet within a preset time.

Optionally, the processor 410 is configured to determine that the target data packet is lost at the second object in a case that a preset number of data packets are received and that the target data packet is not among the preset number of data packets; or, determine that the target data packet is lost at the second object in a case that a preset number of data packets are received and that the target data packet is not received.

Optionally, the processor 410 is configured to determine that the target data packet is lost at the second object in a case that within a preset time, a preset number of data packets are received and that the target data packet is not among the preset number of data packets; or, determine that the target data packet is lost at the second object in a case that within a preset time, a preset number of data packets are received and that the target data packet is not received.

Optionally, the processor 410 is further configured to perform at least one of the following:
determining that the target data packet is lost at the second object in a case that one or a preset number of first data packets are received and that the target data packet is not received, where a sequence number of the first data packet is after a sequence number of the target data packet;
determining that the target data packet is lost at the second object in a case that a preset number of consecutive first data packets are received and that the target data packet is not received, where a sequence number of the first data packet is after a sequence number of the target data packet;
determining that the target data packet is lost at the second object in a case that a data packet with a first sequence number is received and that the target data packet is not received, where the first sequence number is a sequence number of the xth data packet after a sequence number of the target data packet;
determining that the target data packet is lost at the second object in a case that the last data packet in a data packet group to which the target data packet belongs is received and that the target data packet is not received;
determining that the target data packet is lost at the second object in a case that one or a preset number of second data packets are received and that the target data packet is not received, where a sequence number of the second data packet is after a sequence number of the last data packet in the data packet group to which the target data packet belongs, or a sequence number of the second data packet is after the data packet group to which the target data packet belongs;
determining that the target data packet is lost at the second object in a case that a data packet with a second sequence number is received and that the target data packet is not received, where the second sequence number is a sequence number of the wth data packet after a sequence number of the last data packet in the data packet group to which the target data packet belongs, or the second sequence number is a sequence number of the wth data packet after the data packet group to which the target data packet belongs;
determining that the target data packet is lost at the second object in a case that one or a preset number of first data packet groups are received and that the target data packet is not received;
determining that the target data packet is lost at the second object in a case that a data packet group with a third sequence number is received and that the target data packet is not received, where the third sequence number is a sequence number of the yth data packet group after the data packet group to which the target data packet belongs;
determining that the target data packet is lost at the second object in a case that a first data packet in a first data packet group is received and that the target data packet is not received;
determining that the target data packet is lost at the second object in a case that one or a preset number of data packets in a first data packet group are received and that the target data packet is not received;
determining that the target data packet is lost at the second object in a case that a preset number of consecutive data packets in a first data packet group are received and that the target data packet is not received; or
determining that the target data packet is lost at the second object in a case that the zth data packet in a first data packet group is received and that the target data packet is not received;
where a sequence number of the first data packet group is after a sequence number of the data packet group to which the target data packet belongs.

Optionally, the processor 410 is further configured to perform one of the following:
determining that the target data packet is lost at the second object in a case that within the preset time, one or a preset number of first data packets are received and that the target data packet is not received, where a sequence number of the first data packet is after a sequence number of the target data packet;
determining that the target data packet is lost at the second object in a case that within the preset time, the first object receives a preset number of consecutive first data packets and does not receive the target data packet, where a sequence number of the first data packet is after a sequence number of the target data packet;
determining that the target data packet is lost at the second object in a case that within the preset time, a data packet with a first sequence number is received and that the target data packet is not received, where the first sequence number is a sequence number of the xth data packet after a sequence number of the target data packet;
determining that the target data packet is lost at the second object in a case that within the preset time, the last data packet in a data packet group to which the target data packet belongs is received and that the target data packet is not received;
determining that the target data packet is lost at the second object in a case that within the preset time, one or a preset number of second data packets are received and that the target data packet is not received, where a sequence number of the second data packet is after a sequence number of the last data packet in the data packet group to which the target data packet belongs, or a sequence number of the second data packet is after the data packet group to which the target data packet belongs;
determining that the target data packet is lost at the second object in a case that within the preset time, a data packet with a second sequence number is received and that the target data packet is not received, where the second sequence number is a sequence number of the wth data packet after a sequence number of the last data packet in the data packet group to which the target data packet belongs, or the second sequence number is a sequence number of the wth data packet after the data packet group to which the target data packet belongs;
determining that the target data packet is lost at the second object in a case that within the preset time, one or a preset number of first data packet groups are received and that the target data packet is not received;
determining that the target data packet is lost at the second object in a case that within the preset time, a data packet group with a third sequence number is received and that the target data packet is not received, where the third sequence number is a sequence number of the yth data packet group after the data packet group to which the target data packet belongs;
determining that the target data packet is lost at the second object in a case that within the preset time, a first data packet in a first data packet group is received and that the target data packet is not received;
determining that the target data packet is lost at the second object in a case that within the preset time, one or a preset number of data packets in a first data packet group are received and that the target data packet is not received;
determining that the target data packet is lost at the second object in a case that within the preset time, a preset number of consecutive data packets in a first data packet group are received and that the target data packet is not received; or
determining that the target data packet is lost at the second object in a case that within the preset time, the zth data packet in a first data packet group is received and that the target data packet is not received;
where a sequence number of the first data packet group is after a sequence number of the data packet group to which the target data packet belongs.

Optionally, the preset time includes at least one of the following:
a number of preset periods;
a time configured by a network;
a time agreed by a protocol;
a delay of the data packet corresponding to the second object;
a remaining delay of the target data packet; or
a time at which a third data packet in a same data packet group as the target data packet arrives at the first object.

Optionally, the preset period includes at least one of the following:
a period of a data packet;
a period of a data packet group;
a service period;
a transmission period of a data packet; or
a transmission period of a data packet group.

Optionally, the delay of the data packet corresponding to the second object includes at least one of the following:
a delay requirement of the data packet at the second object; or
a delay of the data packet at the second object.

Optionally, the remaining delay includes at least one of the following:
a remaining delay for determining data packet discard or timeout;
a remaining delay of the data packet at the first object; or
a remaining delay requirement of the data packet at the first object.

Optionally, the third data packet includes at least one of the following:
the last data packet in the same data packet group as the target data packet; or
a preset number of data packets in the same data packet group as the target data packet.

Optionally, the preset number includes at least one of the following:
a number configured by a network;
a number agreed by a protocol;
a number of data packets included in a data packet group, where the data packet group includes the data packet group to which the target data packet belongs;
a number of data packets within the preset time; or
a number of data packets in the same data packet group as the target data packet that arrive at the first object within the preset time.

Optionally, x, y, w, and/or z are configured by a network or agreed by a protocol.

Optionally, the data packet includes at least one of the following:
a PDCP SDU;
a PDCP PDU;
a data packet in a PDCP buffer;
a data packet corresponding to an RLC bearer;
a data packet corresponding to a MAC SDU;
a data packet corresponding to a MAC PDU;
a PDU;
a PDU set;
a data burst;
a data frame;
a data slice;
a picture;
a group of pictures;
a group of PDU sets;
a PDU group; or
an IP data packet.

Optionally, the data packet group includes at least one of the following:
a group of PDU sets;
a PDU set;
a data burst;
a data frame;
a data slice;
a picture;
a group of pictures;
a PDU group; or
an IP data packet.

Optionally, the processor is configured to perform at least one of the following operations after it is determined that the target data packet is lost at the second object:
continuing transmission or processing of data packets;
discarding other data packets in the data packet group to which the target data packet belongs;
discarding other data packets associated with the target data packet;
discarding other data packets based on the target data packet; or
lowering priorities of other data packets in the data packet group to which the target data packet belongs.

An embodiment of this application further provides a network-side device, including a processor and a communication interface, where the processor is configured to determine that a target data packet is lost at a second object, the second object being one or more objects preceding the first object in a data transmission path of the data packet. The implementation processes and implementations of the foregoing method embodiment are applicable to the network-side device embodiment, with the same technical effects achieved.

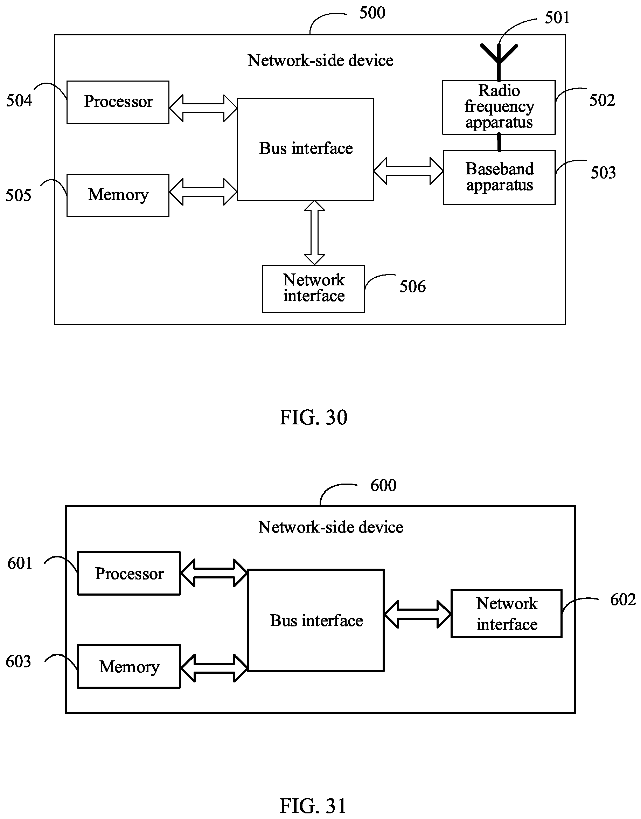

Specifically, an embodiment of this application further provides a network-side device. As shown in FIG. 30, the network-side device 500 includes an antenna 501, a radio frequency apparatus 502, a baseband apparatus 503, a processor 504, and a memory 505. The antenna 501 is connected to the radio frequency apparatus 502. In uplink, the radio frequency apparatus 502 receives information through the antenna 501, and sends the received information to the baseband apparatus 503 for processing. In downlink, the baseband apparatus 503 processes to-be-sent information, and sends the information to the radio frequency apparatus 502; and the radio frequency apparatus 502 processes the received information and then sends the information out through the antenna 501. The method performed by the network-side device in the foregoing embodiment may be implemented on the baseband apparatus 503. The baseband apparatus 503 includes a baseband processor. The baseband apparatus 503 may include, for example, at least one baseband processing unit, where a plurality of chips are disposed on the baseband processing unit. As shown in FIG. 5030, one of the chips is, for example, a baseband processor, and connected to the memory 505 through a bus interface, to invoke the program in the memory 505 to perform the operations of the network device shown in the foregoing method embodiment. The network-side device may further include a network interface 506, where the interface is, for example, a common public radio interface (common public radio interface, CPRI).

Specifically, the network-side device 500 in this embodiment of the present invention further includes: instructions or a program stored on the memory 505 and executable on the processor 504. The processor 504 invokes the instructions or program on the memory 505 to execute the method executed by the modules shown in FIG. 27, with the same technical effects achieved. To avoid repetition, details are not repeated herein.

Specifically, an embodiment of this application further provides a network-side device. As shown in FIG. 31, the network-side device 600 includes a processor 601, a network interface 602, and a memory 603. The network interface 602 is, for example, a common public radio interface (Common Public Radio Interface, CPRI).

Specifically, the network-side device 600 in this embodiment of the present invention further includes: instructions or a program stored in the memory 603 and executable on the processor 601. The processor 601 invokes the instructions or program in the memory 603 to execute the method executed by the modules shown in FIG. 27, with the same technical effects achieved. To avoid repetition, details are not repeated herein.

An embodiment of this application further provides a readable storage medium. A program or instructions are stored on the readable storage medium, and when the program or instructions are executed by a processor, the processes of the foregoing embodiment of the method for determining packet loss are implemented, with the same technical effects achieved. To avoid repetition, details are not repeated herein.

The processor is a processor in the terminal described in the foregoing embodiment. The readable storage medium includes a computer-readable storage medium such as a computer read-only memory ROM, a random access memory RAM, a magnetic disk, or an optical disc.

Another embodiment of this application provides a chip. The chip includes a processor and a communication interface, the communication interface is coupled to the processor, and the processor is configured to run a program or instructions to implement the processes of the foregoing embodiment of the method for determining packet loss, with the same technical effects achieved. To avoid repetition, details are not repeated herein.

It should be understood that the chip mentioned in this embodiment of this application may also be referred to as a system-on-chip, a system chip, a system-on-a-chip, or a system on a chip, or the like.

An embodiment of this application further provides a computer program/program product, where the computer program/program product is stored in a storage medium, and the computer program/program product is executed by at least one processor to implement the processes of the foregoing embodiment of the method for determining packet loss, with the same technical effects achieved. To avoid repetition, details are not repeated herein.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples. Based on the above description of embodiments, persons skilled in the art can clearly understand that the method in the foregoing embodiments can be implemented through software on a necessary general hardware platform or certainly through hardware only, but in many cases, the former is the more preferred implementation. Based on such an understanding, the technical solutions of this application essentially, or the part contributing to the prior art may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in the embodiments of this application. The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A method for determining packet loss, comprising:
determining, by a first object, that a target data packet is lost at a second object, wherein the second object is one or more objects preceding the first object in a data transmission path of the data packet.

2. The method according to claim 1, wherein
the first object is a first node, and the second object is one or more communication interfaces preceding the first node in the data transmission path of the data packet;
or
the first object is a first protocol layer, and the second object is one or more second protocol layers preceding the first protocol layer in the data transmission path of the data packet, wherein the first protocol layer and the second protocol layer belong to a same node.

3. The method according to claim 1, wherein the target data packet loss comprises at least one of the following situations:
the target data packet is not successfully delivered to the first object;
the target data packet is not successfully transmitted at the second object;
the target data packet is lost at the second object;
the target data packet is transmitted or processed at the second object beyond a preset delay; or
the target data packet is transmitted at the second object beyond a preset number of times.

4. The method according to claim 1, wherein the determining, by a first object, that a target data packet is lost at the second object comprises:
determining that the target data packet is lost at the second object in a case that the first object does not receive the target data packet within a preset time.

5. The method according to claim 1, wherein the determining, by a first object, that a target data packet is lost at the second object comprises:
determining that the target data packet is lost at the second object in a case that the first object receives a preset number of data packets and that the target data packet is not among the preset number of data packets; or,
determining that the target data packet is lost at the second object in a case that the first object a preset number of data packets and does not receive the target data packet.

6. The method according to claim 1, wherein the determining, by a first object, that the target data packet is lost at the second object comprises:
determining that the target data packet is lost at the second object in a case that the first object receives a preset number of data packets within a preset time and that the target data packet is not among the preset number of data packets; or
determining that the target data packet is lost at the second object in a case that the first object receives a preset number of data packets within a preset time and does not receive the target data packet.

7. The method according to claim 1, wherein the determining, by a first object, that a target data packet is lost at the second object comprises at least one of the following:
determining that the target data packet is lost at the second object in a case that the first object receives one or a preset number of first data packets and does not receive the target data packet, wherein a sequence number of the first data packet is after a sequence number of the target data packet;
determining that the target data packet is lost at the second object in a case that the first object receives a preset number of consecutive first data packets and does not receive the target data packet, wherein a sequence number of the first data packet is after a sequence number of the target data packet;
determining that the target data packet is lost at the second object in a case that the first object receives a data packet with a first sequence number and does not receive the target data packet, wherein the first sequence number is a sequence number of the xth data packet after a sequence number of the target data packet;
determining that the target data packet is lost at the second object in a case that the first object receives the last data packet in a data packet group to which the target data packet belongs and does not receive the target data packet;
determining that the target data packet is lost at the second object in a case that the first object receives one or a preset number of second data packets and does not receive the target data packet, wherein a sequence number of the second data packet is after a sequence number of the last data packet in the data packet group to which the target data packet belongs, or a sequence number of the second data packet is after the data packet group to which the target data packet belongs;
determining that the target data packet is lost at the second object in a case that the first object receives a data packet with a second sequence number and does not receive the target data packet, wherein the second sequence number is a sequence number of the wth data packet after a sequence number of the last data packet in the data packet group to which the target data packet belongs, or the second sequence number is a sequence number of the wth data packet after the data packet group to which the target data packet belongs;
determining that the target data packet is lost at the second object in a case that the first object receives one or a preset number of first data packet groups and does not receive the target data packet;
determining that the target data packet is lost at the second object in a case that the first object receives a data packet group with a third sequence number and does not receive the target data packet, wherein the third sequence number is a sequence number of the yth data packet group after the data packet group to which the target data packet belongs;
determining that the target data packet is lost at the second object in a case that the first object receives a first data packet in a first data packet group and does not receive the target data packet;
determining that the target data packet is lost at the second object in a case that the first object receives one or a preset number of data packets in a first data packet group and does not receive the target data packet;
determining that the target data packet is lost at the second object in a case that the first object receives a preset number of consecutive data packets in a first data packet group and does not receive the target data packet; or
determining that the target data packet is lost at the second object in a case that the first object receives the zth data packet in a first data packet group and does not receive the target data packet;
wherein a sequence number of the first data packet group is after a sequence number of the data packet group to which the target data packet belongs.

8. The method according to claim 1, wherein the determining, by a first object, that a target data packet is lost at the second object comprises one of the following:
determining that the target data packet is lost at the second object in a case that within a preset time, the first object receives one or a preset number of first data packets and does not receive the target data packet, wherein a sequence number of the first data packet is after a sequence number of the target data packet;
determining that the target data packet is lost at the second object in a case that within a preset time, the first object receives a preset number of consecutive first data packets and does not receive the target data packet, wherein a sequence number of the first data packet is after a sequence number of the target data packet;
determining that the target data packet is lost at the second object in a case that within a preset time, the first object receives a data packet with a first sequence number and does not receive the target data packet, wherein the first sequence number is a sequence number of the xth data packet after a sequence number of the target data packet;
determining that the target data packet is lost at the second object in a case that within a preset time, the first object receives the last data packet in a data packet group to which the target data packet belongs and does not receive the target data packet;
determining that the target data packet is lost at the second object in a case that within a preset time, the first object receives one or a preset number of second data packets and does not receive the target data packet, wherein a sequence number of the second data packet is after a sequence number of the last data packet in the data packet group to which the target data packet belongs, or a sequence number of the second data packet is after the data packet group to which the target data packet belongs;
determining that the target data packet is lost at the second object in a case that within a preset time, the first object receives a data packet with a second sequence number and does not receive the target data packet, wherein the second sequence number is a sequence number of the wth data packet after a sequence number of the last data packet in the data packet group to which the target data packet belongs, or the second sequence number is a sequence number of the wth data packet after the data packet group to which the target data packet belongs;
determining that the target data packet is lost at the second object in a case that within a preset time, the first object receives one or a preset number of first data packet groups and does not receive the target data packet;
determining that the target data packet is lost at the second object in a case that within a preset time, the first object receives a data packet group with a third sequence number and does not receive the target data packet, wherein the third sequence number is a sequence number of the yth data packet group after the data packet group to which the target data packet belongs;
determining that the target data packet is lost at the second object in a case that within a preset time, the first object receives a first data packet in a first data packet group and does not receive the target data packet;
determining that the target data packet is lost at the second object in a case that within a preset time, the first object receives one or a preset number of data packets in a first data packet group and does not receive the target data packet;
determining that the target data packet is lost at the second object in a case that within a preset time, the first object receives the zth data packet in a first data packet group and does not receive the target data packet;
determining that the target data packet is lost at the second object in a case that within a preset time, the first object receives a preset number of consecutive data packets in a first data packet group and does not receive the target data packet; or
wherein a sequence number of the first data packet group is after a sequence number of the data packet group to which the target data packet belongs.

9. The method according to claims 4, 6 or 8, wherein the preset time comprises at least one of the following:
a number of preset periods;
a time configured by a network;
a time agreed by a protocol;
a delay of the data packet corresponding to the second object;
a remaining delay of the target data packet; or
a time at which a third data packet in a same data packet group as the target data packet arrives at the first object.

10. The method according to claim 9, wherein the preset period comprises at least one of the following:
a period of a data packet;
a period of a data packet group;
a service period;
a transmission period of a data packet; or
a transmission period of a data packet group.

11. The method according to claim 9, wherein the delay of the data packet corresponding to the second object comprises at least one of the following:
a delay requirement of the data packet at the second object; or
a delay of the data packet at the second object.

12. The method according to claim 9, wherein the remaining delay comprises at least one of the following:
a remaining delay for determining data packet discard or timeout;
a remaining delay of the data packet at the first object; or
a remaining delay requirement of the data packet at the first object.

13. The method according to claim 9, wherein the third data packet comprises at least one of the following:
the last data packet in the same data packet group as the target data packet; or
a preset number of data packets in the same data packet group as the target data packet.

14. The method according to claim 5, 6, 7, 8, or 13, wherein the preset number comprises at least one of the following:
a number configured by a network;
a number agreed by a protocol;
a number of data packets comprised in a data packet group, wherein the data packet group comprises the data packet group to which the target data packet belongs;
a number of data packets within the preset time; or
a number of data packets in the same data packet group as the target data packet that arrive at the first object within the preset time.

15. The method according to claim 7 or 8, wherein x, w, y, and/or z are configured by a network or agreed by a protocol.

16. The method according to claim 1, wherein the data packet comprises at least one of the following:
a PDCP SDU;
a PDCP PDU;
a data packet in a PDCP buffer;
a data packet corresponding to an RLC bearer;
a data packet corresponding to a MAC SDU;
a data packet corresponding to a MAC PDU;
a PDU;
a PDU set;
a data burst;
a data frame;
a data slice;
a picture;
a group of pictures;
a group of PDU sets;
a PDU group; or
an IP data packet.

17. The method according to claim 7 or 8, wherein the data packet group comprises at least one of the following:
a group of PDU sets;
a PDU set;
a data burst;
a data frame;
a data slice;
a picture;
a group of pictures;
a PDU group; or
an IP data packet.

18. The method according to claim 1, wherein after determining that the target data packet is lost at the second object, the first object performs at least one of the following operations:
continuing transmission or processing of data packets;
discarding other data packets in the data packet group to which the target data packet belongs;
discarding other data packets associated with the target data packet;
discarding other data packets based on the target data packet; or
lowering priorities of other data packets in the data packet group to which the target data packet belongs.

19. An apparatus for determining packet loss, comprising:
a determining module, configured to determine that a target data packet is lost at a second object, wherein the second object is one or more objects preceding the first object in a data transmission path of the data packet.

20. A communication device, comprising a processor and a memory, wherein the memory is configured to store a program or instructions executable on the processor, and when the program or instructions are executed by the processor, the steps of the method for determining packet loss according to any one of claims 1 to 18 are implemented.

21. A readable storage medium, wherein a program or instructions are stored on the readable storage medium has stored, and when the program or instructions are executed by a processor, the method for determining packet loss according to any one of claims 1 to 18 is implemented.
